# EUROPEAN PATENT APPLICATION

(11) **EP 3 124 405 A1**
(43) Date of publication of application: **01.02.2017**
(21) Application number: 16460049.6
(22) Date of filing: 29.07.2016
(51) Int. Cl.: B65G 1/137, G06Q 10/08, G07F 17/12

(54) **STORAGE DEVICE**

(30) Priority: 31.07.2015 PL 41336515
(71) Applicant: JBG - 2 sp. z.o.o., 43-254 Warszowice (PL)
(72) Inventor: Brzózka, Adrian, 43-450 Ustron (PL); Gold, Lech, 41-600 Swietochlowice (PL)
(74) Representative: Marek, Joanna

(57) **Abstract**

The subject of the invention is a storage device, especially for storing items such as parcels or courier packages, consisting of a housing 1, shelves 7 with products 5, an automatic inserter/extractor 3, a drop-off/pick-up window 6, and an electronic control panel 8, characterized in that inside the housing 1 three separate zones are located: a low-temperature zone LT, a medium-temperature zone NT, and an ambient-temperature zone PT, separated from each other by insulating panels 2, between which the automatic inserter/extractor 3 moves, whereas the access of the automatic inserter/extractor 3 to the low-temperature zone LT and the medium-temperature zone NT, with temperatures different than the ambient temperature, is obtained through thermally insulating movable partitions 4.

## Description

The subject of the invention is a device for storing items, especially items such as parcels or courier packages.

In the specifications of the Polish utility model application no. W.121349, a package machine has been disclosed, designed to be installed outdoors, and resistant to adverse atmospheric conditions, such as rain, snow, and sunrays, and having a form of a free-standing device, equipped with a control unit accessed via the Internet, working together with a system of storage boxes designed for sending and receiving packages by customers without any third party involvement. Both the shipping and the package receipt information are generated via the Internet by means of the account of the person logged into the machine owner's system/website. The package machine consists of a storage boxes control module, located inside a frame, which is encased by outer walls, and a wall with storage boxes. The base of the package machine is seated on adjustable feet, and is joined in a detachable way with the frame, covered on both sides by side walls, and at the rear by a bottom screen, middle screen, upper screen, and a central screen. At the front, the package machine is equipped with large storage boxes, medium storage boxes, and small storage boxes, and is covered from above by a roof mounted in a detachable way with bolts sank into sockets.

From the specifications of the American patent application no. US2005063801, a method and an automated system are known, for storing and retrieving varied items or articles, in which the items are stored on shelves, which are grouped into racks. An appropriate retrieval device, controlled by a control unit, travels in front of the racks in such a way, that the retrieval device becomes aligned with the outlet of a conveyor carrying stored articles of a chosen kind, to retrieve at least one article. Items or articles having the same reference codes are stored next to each other on top of one, or a few, freely moving endless conveyor belts, the conveyor belt, or belts, forming the storage surface of the compartments of a magazine rack. The conveyor belts are driven selectively, causing the movement of the articles on the conveyor belts towards the pickup location. The selective drive is achieved by means of drive wheels, mounted to a lift travelling in front of the magazine racks, driving, by means of friction, the conveyor belt or belts containing the chosen or requested article, in such a way that at least one of the first articles on the belt is transported to the receiving surface of the lift.

In the solutions presented above, as well as in the solutions known from the state of the art, the storage devices, or package machines, are equipped with various kinds of manipulators, devices designed for retrieving and delivering automatically stored articles. Also, devices are known, for storing and retrieval of automatically stored products (e.g. pharmaceuticals), in which lowered temperatures are maintained.

The purpose of the invention was to provide a storage device with a simple design, equipped with an automatic inserter/extractor, intended for storing articles, such as parcels or courier packages, in conditions appropriate for varied types of products.

The essence of the invention is a storage device, especially for storing articles such as parcels or courier packages, consisting of a housing, shelves with products, an automatic inserter/extractor, a drop-off/pick-up window, and an electronic control panel, and characterized in that inside the housing three separate zones are located: a low-temperature zone, a medium-temperature zone, and an ambient-temperature zone, separated from each other by insulating panels, between which the automatic inserter/extractor moves, whereas the access of the automatic inserter/extractor to the low-temperature and medium-temperature zones, with temperatures different than the ambient temperature, is obtained through thermally insulating movable partitions.

Favorably, the temperature in the low-temperature zone can be set to any value in the range between -25°C and -1°C, whereas the temperature in the medium-temperature zone can be set to any value in the range between -1°C and 25°C.

Favorably, the storage device has two drop-off/pick-up windows.

The device, according to the invention, has three zones in which different temperatures are maintained - a low-temperature zone LT, a medium-temperature zone NT, and an ambient-temperature zone PT, which allow storage - in one device - of products, such as parcels or courier packages, in the zones with temperatures appropriate for the given type of a product (e.g. frozen food, pharmaceuticals, home appliances). An automatic inserter/extractor with three degrees of freedom moves between the zones and the drop-off/pick-up window. The automatic inserter/extractor retrieves an article, which can be a parcel or a courier package, from a respective zone, and places it in the drop-off/pick-up window, or it picks up an article from the drop-off/pick-up window and deposits it in an appropriate zone. The operation of the automatic inserter/extractor is controlled by an electronic control panel.

The insulation between the zones has been achieved through the use of insulating panels, filled with a material with low thermal conductivity, e.g. a polyurethane or polystyrene foam.

Furthermore, the access of the automatic inserter/extractor to the zones with temperatures lower than the ambient temperature is possible thanks to an application of thermally insulating movable partitions, in the form of hinged, sliding, or roller doors. The thermally insulating movable partitions are thermally insulated, and are controlled electronically or pneumatically.

The higher number of the drop-off/pick-up windows in the storage device allows for simultaneously dropping off and picking up packages in an independent manner.
In the device, according to the invention, it is possible to store packages with large outer dimensions. It is also possible to mount shelves (e.g. for packages with smaller outer dimensions) in the upper regions of the device, outside of easy human reach - without a need for using additional devices/items, as lifts or ladders.

The lack of the limitations of the device design in the form of, for example, shelf placement at the level accessible to humans, and also the possibility to store packages of larger outer dimensions, as well as the possibility of placing parts of the device, according to the invention, underground or at a specified height, allows for an increase in the device capacity, a greater diversity of goods that can be stored, not only in respect to their storing condition requirements but also in regard to their dimensions, as well as a significant freedom regarding the choice of the placement of the whole device according to the invention.

The invention is shown, in favorable examples of execution, in the drawings, in which the respective figures represent:
fig. 1 Storage device - front view;
fig. 2 Storage device - section A-A of fig. 1;
fig. 3 Storage device - section B-B of fig. 1;
fig. 4 A second example of the device execution according to the invention, with the zones with different temperatures positioned along the pathway of the automatic inserter/extractor - section B-B of fig. 1;
fig. 5 A third example of the device execution according to the invention, with the drop-off / pick-up window at one side of the device - section B-B of fig. 1;
fig. 6 A shelving configuration of the device according to the invention in a single-row arrangement - section B-B of fig. 1;
fig. 7 A shelving configuration of the device according to the invention in a parallel arrangement - section B-B of fig. 1;
fig. 8 A shelving configuration of the device according to the invention in an expanded arrangement - section B-B of fig. 1;
fig. 9 A fourth example of the device execution according to the invention, with two drop-off/pick-up windows;

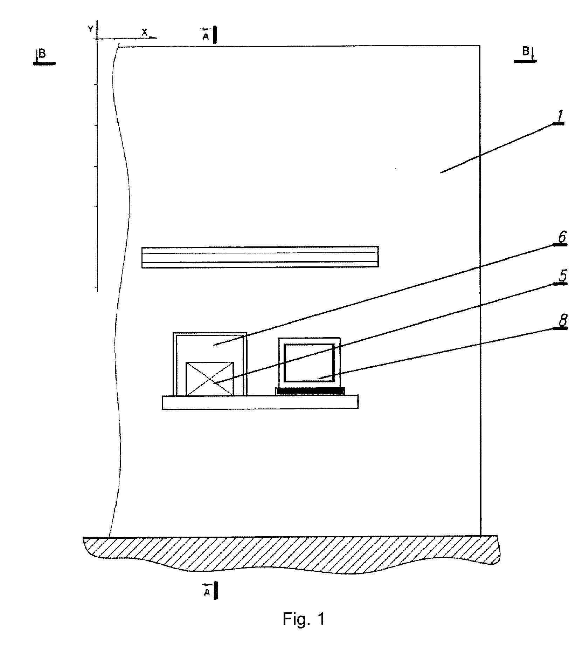

The example of an execution of the storage device, especially for storing items such as parcels and courier packages, shown in figures 1, 2, 3, 4, 5, consists of the housing 1, inside which there are three zones: a low-temperature zone LT, a medium-temperature zone NT, and an ambient temperature zone PT. These zones are separated from each other with the isolating panels 2. The access of the automatic inserter/extractor 3 to the LT and NT zones, with the temperatures differing from the ambient temperature, is being obtained through the thermally insulating movable partitions 4. The automatic inserter/extractor with three degrees of movement, in the X, Y, and Z directions, retrieves a product 5 from the respective zone, LT, NT or PT, from one of the shelves 7 and places it in the drop-off/pick-up window 6, or it picks up the item 5 from the drop-off/pick-up window 6 and deposits it in an appropriate zone LT, NT or PT, on one of the shelves 7. In front of the device, there is the control panel 8 that controls the operation of the automatic inserter/extractor 3.

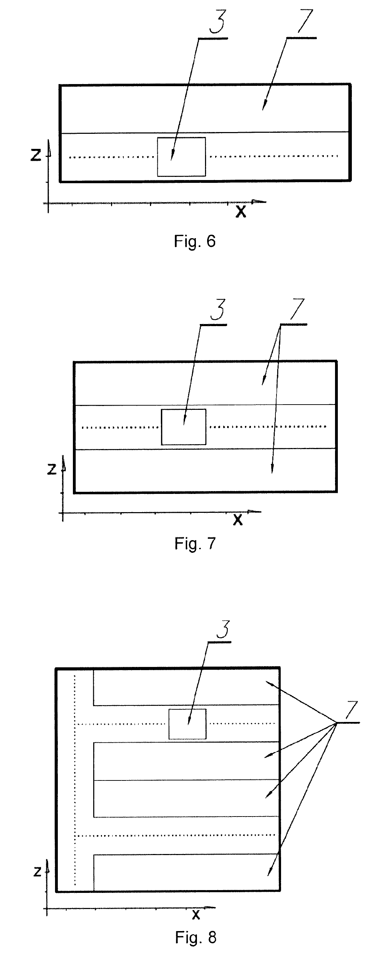

Fig. 6 shows the shelving configuration of the device according to the invention, in an expanded arrangement, where the automatic inserter/extractor 3 travels in front of the shelves 7, along the X-axis.

Fig. 7 shows the shelving configuration of the device according to the invention, in a parallel arrangement, where the automatic inserter/extractor 3 travels between the shelves 7, along the X-axis.

Fig. 8 shows the shelving configuration of the device according to the invention, in a parallel arrangement, where the automatic inserter/extractor 3 travels between the shelves along the X-axis, and in front of the shelves along the Z-axis.

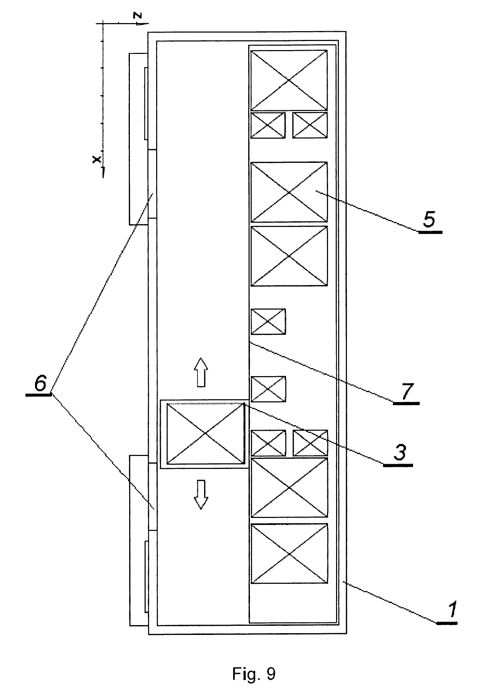

In figure 9, a fourth example of the device execution according to the invention has been shown, with two drop-off/pick-up windows 6.

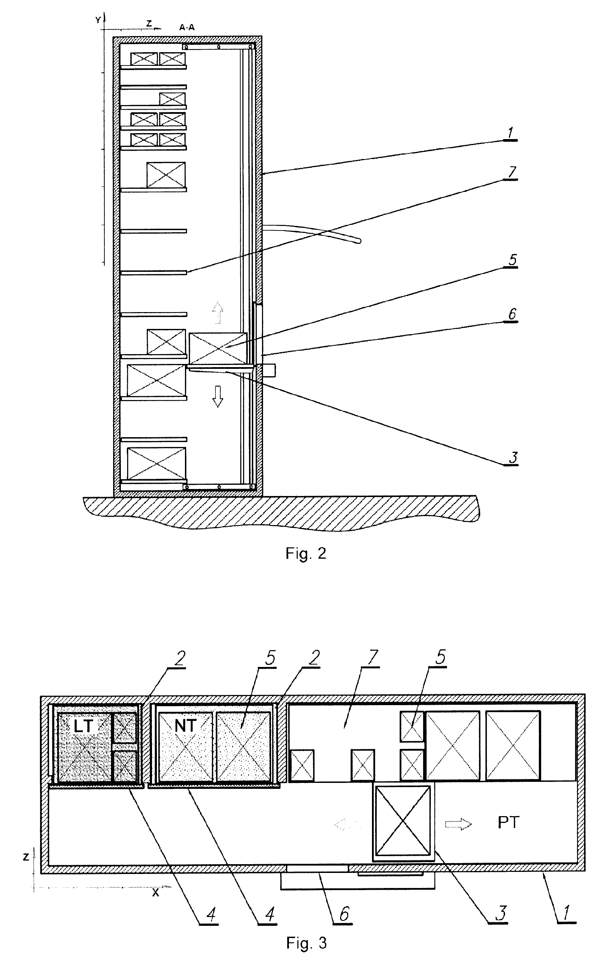

Although in the example of the invention execution shown in fig. 2 the shelves 7 together with the products 5 are located above, below and at the same level as the drop-off/pick-up window 6, alternative solutions are possible, in which the shelves 7 together with the products 5 are located only above, only below, or only at the same level as the drop-off/pick-up window 6.

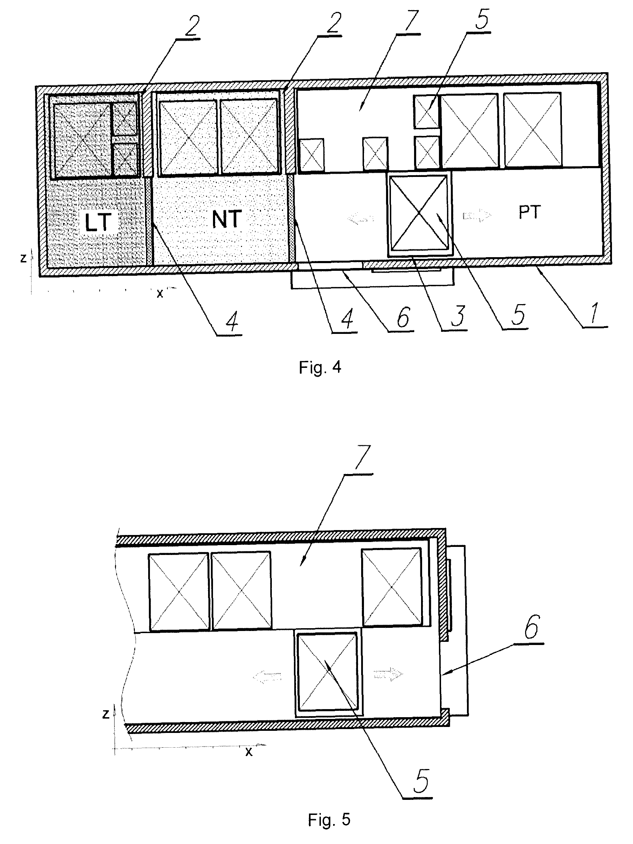

Although in the example of the invention execution shown in fig. 3 and 4 the zones with differing temperatures are located in the following arrangement (from left to right): the low-temperature zone LT, the medium-temperature zone NT, the ambient-temperature zone PT, other arrangements are possible, with the order of the zones exchanged, e.g., PT, NT, LT, or with only chosen zones present.

Although in the third example of the device execution according to the invention shown in fig. 5 the drop-off/pick-up window 6 is located on the right-hand side of the device, an alternative execution is possible, in which the drop-off/pick-up window 6 is located on the left-hand side of the device, or the drop-off/pick-up window 6 is located in the middle of the device.

Although in the example of the shelving configuration in an expanded arrangement, shown in fig. 8, the automatic inserter/extractor 3 travels between the shelves 7 along the Z-axis at the left-hand side of the shelves 7, an alternative solution is possible, in which the automatic inserter/extractor 3 travels between the shelves 7 along the Z-axis at the right-hand side of the shelves 7, or in the middle area between the shelves.

The device operation, according to the invention, is controlled by a programmable system (a computer with appropriate software), which is connected to the end-user's product (goods) distribution system, and which assures the optimal operation of the automation systems.

## Claims

1. Storage device, especially for storing articles such as parcels or courier packages, consisting of a housing (1), shelves (7) with products (5), an automatic inserter/extractor (3), a drop-off/pick-up window (6), and an electronic control panel (8), wherein inside the housing, three separate zones are located: a low-temperature zone LT, a medium-temperature zone NT, and an ambient-temperature zone PT, separated from each other by insulating panels (2), between which the automatic inserter/extractor (3) moves, whereas the access of the automatic inserter/extractor (3) to the low-temperature zone LT and the medium-temperature zone NT, with temperatures different than the ambient temperature, is obtained through thermally insulating movable partitions (4).

2. Device according to claim 1, wherein the temperature in the low-temperature zone LT is in the range between -25°C and -1°C, whereas the temperature in the medium-temperature zone is in the range between -1°C and 25°C.

3. Device according to claim 1, wherein it has two drop-off/pick-up windows (6).
